# EUROPEAN PATENT SPECIFICATION

(11) **EP 4 197 306 B1**
(45) Date of publication and mention of the grant of the patent: **09.04.2025**
(21) Application number: 22213826.5
(22) Date of filing: 15.12.2022
(51) Int. Cl.: A01B 59/00, A01B 59/042, A01B 59/043, A01B 59/06, B60D 1/14, B60D 1/46

(54) **ARM OF A TRACTOR HITCH DEVICE AND METHOD FOR MANUFACTURING AN ARM OF A TRACTOR HITCH DEVICE**
ARM EINER TRAKTORANHÄNGERKUPPLUNG UND VERFAHREN ZUR HERSTELLUNG EINES ARMS EINER TRAKTORANHÄNGERKUPPLUNG
BRAS D'UN DISPOSITIF D'ATTELAGE DE TRACTEUR ET PROCÉDÉ DE FABRICATION D'UN BRAS D'UN DISPOSITIF D'ATTELAGE DE TRACTEUR

(30) Priority: 15.12.2021 FI 20216281
(43) Date of publication of application: 21.06.2023
(73) Proprietor: LH Lift Oy, 41370 Kuusa (FI)
(72) Inventor: VIIKKI, Timo, 41370 Kuusa (FI)
(74) Representative: Kespat Oy

(56) References cited:
- EP-A1- 1 905 289
- JP-A- H09 285 205
- KR-A- 20180 119 017
- US-A1- 2013 037 283

## Description

The invention relates to an arm of a tractor hitch device, the arm comprising a first attachment link and a second attachment link, wherein a first axle is attached to the first attachment link and a second axle is attached to the second attachment link, and wherein an adjustment tube with a sleeve-like first end and with a second end is provided between the first attachment link and the second attachment link, and wherein the first axle is partially inserted coaxially into the sleeve-like first end of the adjustment tube and wherein the second axle is attached to the second end of the adjustment tube, and wherein a rotary joint is provided between the first axle and the adjustment tube that allows the first axle and the adjustment tube to rotate freely relative to each other, wherein, for the formation of the rotary joint, the first axle includes a ridge and a thinner axle section between the ridge and the first attachment link, and the sleeve-like first end of the adjustment tube includes a narrowing that extends to the thinner axle section, the narrowing being configured around the thinner axle section. The invention also relates to a method for manufacturing an arm of a tractor hitch device.

Hitch devices are used in tractors to attach different types of implements to the tractor. Hitch devices comprise a plurality of different arms with the common feature that they comprise a first attachment link and a second attachment link, wherein the length between the attachment links is adjustable in order to render the arms suitable for use with different tractors and with different implements.

A common hitch device is a three-point hitch device which can be arranged in the rear of the tractor and which includes two drawing arms and one pushing arm, which are generally operated hydraulically. The pushing arm is arranged above the drawing arms and centred between the latter in a horizontal direction. The function of the pushing arm is to control the angle of inclination of the connected implement parallel to the tractor. The drawing arms regulate the height of the connected implement. Lateral stabilizers are also employed between the drawing arms and the tractor by means of which the lateral movement of the implement is limited. By means of the adjustable lifting bar of the drawing arm, it is possible to adjust the height difference between the respective drawing arms and thus the angle of transverse inclination of the connected implement.

It is also possible to use a two-point hitch device, which lacks the pushing arm of the three-point hitch device, to attach implements to the tractor. The drawing arms forming the two points regulate the height of the implement and limit its lateral freedom.

The length adjustment of the arm can be provided by means of a thread or hydraulically according to the prior art. In particular turnbuckle solutions are common. For the length adjustment of the arm between the first attachment link and the second attachment link, a rotatable adjustment tube is frequently used that has two threads in a turnbuckle solution: first threads at a first end of the adjustment screw and second, inverse threads at a second end of the adjustment tube. The adjustment tube is thus freely rotatable relative to the first attachment link and the second attachment link. The arms of the tractor hitch device are subjected to pushing and pulling loads, so it is necessary to make the structure of the arms very robust. In the solutions according to the prior art, in particular the rotary joints of the adjustment tube represent weak points.

The patent publication JP H09285205 A represents known prior art, in which a threadless rotary joint is provided in an arm of a tractor hitch device between the adjustment tube and an axle attached to an attachment link. The arm disclosed in the publication is manufactured by machining a ridge into the axle, partially inserting the axle with the ridge first into the adjustment tube, and then welding a separate sleeve onto the end of the adjustment tube, the sleeve blocking the ridge in the adjustment tube. The attachment link is then welded to the end of the axle opposite the ridge. A problem with known arms is the poor durability of the welded joints.

Further prior art can be found in documents KR 2018 0119017 A, US 2013/037283 A1, and EP 1 905 289 A1.

It is an object of the invention to provide an improved arm of a tractor hitch device that can withstand the pushing and pulling loads better than before. The characteristic features of this invention are indicated in the attached patent claim 1. A further object of the invention is to provide a new method for manufacturing an arm of a tractor hitch device in order for the arm to withstand the pushing and pulling loads better than before. The characteristic features of this invention are indicated in the attached patent claim 11.

An arm of a tractor hitch device according to the invention comprises a first attachment link and a second attachment link, wherein a first axle is attached to the first attachment link and a second axle is attached to the second attachment link, and wherein an adjustment tube with a sleeve-like first end and with a second end is provided between the first attachment link and the second attachment link, and wherein the first axle is partially inserted coaxially into the sleeve-like first end of the adjustment tube and wherein the second axle is attached to the second end of the adjustment tube, and wherein a rotary joint is provided between the first axle and the adjustment tube that allows the first axle and the adjustment tube to rotate freely relative to each other, wherein, for the formation of the rotary joint, the first axle includes a ridge and a thinner axle section between the ridge and the first attachment link, and the sleeve-like first end of the adjustment tube includes a narrowing that extends to the thinner axle section, the narrowing being configured around the thinner axle section. The rotary joint is a crimped reduction joint, wherein the first end of the adjustment tube is reduced so as to render the diameter of the inner edge of the narrowing smaller than the diameter of the ridge while leaving the diameter of the inner edge of the narrowing larger than the diameter of the thinner axle section.

It is thereby possible to form a threadless rotary joint between the first attachment link and the adjustment tube that can withstand pushing and pulling loads better than the prior art. In addition, the threadless rotary joint according to the invention requires less space compared to a turnbuckle solution, i.e. the arm can be made shorter than before. The arm according to the invention is also advantageous to manufacture in terms of its cost, as less labour and manufacturing materials are required than before.

In the arm according to the invention, the narrowing of the sleeve-like first end of the adjustment tube, i.e. the diameter of the inner edge of the ridge on the inner surface, is rendered smaller than the diameter of the ridge of the first axle by reducing the first end of the adjustment tube in a manufacturing step of the arm. The narrowing of the first end of the adjustment tube is configured loosely around the thinner axle section of the first axle, which allows the adjustment tube to rotate freely around the first axle while the edges of the thinner axle section limit the longitudinal movement of the first axle when they hit the edges of the narrowing of the adjustment tube.

Preferably, the first end of the adjustment tube in the reduction joint is cold-formed so as to have a smaller diameter. In the cold forming, the sleeve-like first end of the adjustment tube is crimped to a smaller diameter at room temperature, which causes a plastic deformation of the first end of the prefabricated adjustment tube, in the course of which the narrowing is left loosely in the groove formed by the thinner axle section and its edges when the inner diameters of the first end of the adjustment tube are reduced in the crimping step. When a metal article is cold-formed, its grains are flattened in the direction of working. The relative proportion of the grain boundary in the volume of the article and the dislocation density increase. The article becomes stronger; its yield strength increases while its elongation decreases. Crimping does not leave any pronounced points of discontinuity in the first end of the adjustment tube because the working of the metal brought about by the crimping increases towards the end of the article.

The reduction according to the invention can also be realized by other known metal working techniques such as other cold-working techniques or hot working at elevated temperatures.

Preferably, the first end of the adjustment tube is essentially structurally homogeneous with the exception of the changes in its crystal structure caused by the reduction. Structural homogeneity here means that the article, here the first end of the adjustment tube, is manufactured from a single piece of manufacturing material. In other words, the article thus does not contain any welded joints or other structural joints that compromise the mechanical strength of the structure.

By means of the reduction in the manufacturing phase and resulting reduction joint in the first end of the adjustment tube of the finished arm, the first end of the adjustment tube can be rendered structurally homogeneous, which makes welded joints or other joints that compromise mechanical strength unnecessary in the first end of the adjustment tube. This additionally allows the arm to be produced in a simpler manner than before, which expedites the manufacture of the arm and increases its mechanical strength.

The adjustment tube can be structurally homogeneous as a whole. It is thus possible for the adjustment tube to be formed entirely from a single piece of manufacturing material, preferably of metal pipe, most preferably made of steel, so that selected narrowings, reductions and threads or other features according to a selected criterion are machined into the adjustment tube. It is thereby possible to render the arm structurally very robust.

Preferably, the first attachment link and the first axle are structurally homogeneous. The first attachment link and the first axle can thus be machined from a single piece of manufacturing material, preferably steel, which renders the first attachment link and the first axle structurally very robust. The reduction of the first end of the adjustment tube of the arm makes it possible to attach the whole formed by the structurally homogeneous attachment link and the first axle to the adjustment tube by means of a rotary joint.

Preferably, the arm is a screw-adjustable lateral stabilizer or an automatic lateral stabilizer or a lifting bar or a pushing arm of a three-point hitch device. These applications require a rotary joint that can withstand in particular pulling and pushing loads. The arm can also be the arm of a two-point hitch device or of some other tractor hitch device.

Preferably, the inner surface at the second end of the adjustment tube has an internal thread and the outer surface of the second axle has a corresponding external thread so that the second axle is configured so as to be partially rotatable into the adjustment tube by a selected distance in order to form the length adjustment of the arm. This allows a length adjustment of the arm to be provided in a mechanically simple manner. The adjustment tube thus only has one threaded joint at the second end of the adjustment tube with the second axle, which increases the precision of a length adjustment of the arm vis-à-vis a turnbuckle solution, since an adjustment of a single rotation of the adjustment tube halves the distance of movement vis-à-vis a turnbuckle using the same threads. Alternatively, the length adjustment of the arm can be provided, for example, hydraulically, whereby the arm can accommodate a hydraulic piston by means of which it is possible to adjust the length of the arm by controlling the pressure of a hydraulic fluid with a hydraulic pump.

Preferably, the diameter of the outer surface of the first end of the adjustment tube is smaller than the diameter of the thickest point of the outer surface of the adjustment tube. The adjustment tube can thus be manufactured from a metal tube of uniform material thickness in its initial condition and the rotary joint is produced by reducing the first end of the adjustment tube.

Preferably, the diameter of the outer surface of the second end of the adjustment tube is smaller than the diameter of the thickest point of the outer surface of the adjustment tube. An attachment for the second axle can thus be made in the second end of the adjustment tube by means of reduction.

The diameter of the inner surface of the narrowing can be 0.1 - 1.5 mm, preferably 0.4 - 1.0 mm, larger than the diameter of the thinner axle section. This yields a joint which can withstand a load very well structurally, yet which still has sufficient clearance for a rotational degree of freedom.

In one embodiment of the invention, the length of the thinner axle section of the first axle is 0.1 - 2.0 mm, preferably 0.5 - 1.5 mm, longer than the length of the narrowing of the adjustment tube, which makes it possible to form a joint that is rotary yet still fixed in the longitudinal direction of the arm. By means of a joint that only has just enough clearance in both the longitudinal and radial directions, a robust and sturdy yet freely rotatable structure is provided, which can be used, for example, in an automatic lateral stabilizer, a lifting bar or a pushing arm of a three-point hitch device of a tractor.

In another embodiment of the invention, the length of the thinner axle section of the first axle is significantly longer, preferably 3 - 50 cm, more preferably 5 - 15 cm longer, than the length of the narrowing of the adjustment tube, thus allowing a longitudinal movement of the first axle and the adjustment tube with respect to each other. This yields an arm that also has, in addition to the rotary joint, a longitudinal degree of freedom so that the structure is suitable for use, for example, in a screw-adjustable lateral stabilizer or a lifting bar of a three-point hitch device of a tractor for which a longitudinal freedom of movement of the arm can also be necessary depending on the implement.

In the method according to the invention for manufacturing an arm of a tractor hitch device, the arm comprises a first attachment link and a second attachment link, wherein a first axle is attached to the first attachment link and a second axle is attached to the second attachment link, and wherein an adjustment tube with a sleeve-like first end and with a second end is provided between the first attachment link and the second attachment link, and wherein the first axle is partially inserted coaxially into the sleeve-like first end of the adjustment tube and wherein the second axle is attached to the second end of the adjustment tube, and wherein a rotary joint is formed between the first axle and the adjustment tube that allows the first axle and the adjustment tube to rotate freely relative to each other, a ridge is machined into the first axle and a thinner axle section is machined between the ridge and the first attachment link, and a narrowing is machined into the sleeve-like first end of the adjustment tube. The first axle is partially inserted coaxially into the adjustment tube so that the thinner axle section and the narrowing are aligned, after which the sleeve-like first end of the adjustment tube is reduced by crimping so as to render the diameter of the inner edge of the narrowing smaller than the diameter of the ridge while leaving the diameter of the inner edge of the narrowing larger than the diameter of the thinner axle section.

It is thereby possible to manufacture a rotary joint between the first attachment link and the adjustment tube that can withstand pushing and pulling loads better than the prior art. In addition, the rotary joint manufactured by means of the method according to the invention requires less space compared to a turnbuckle solution. The method according to the invention also requires less labour and manufacturing materials to be employed for the manufacture of an arm than before.

Preferably, the first attachment link and the first axle are joined together before the reduction, or the first attachment link and the first axle are machined from a single piece of manufacturing material. This facilitates and expedites the manufacture of the arm.

Preferably, an internal thread is machined into the inner surface of the second end of the adjustment tube and a corresponding external thread is machined into the outer surface of the second axle, and the second axle is partially rotated into the adjustment tube by a selected distance in order to form the length adjustment of the arm. It is thereby possible to provide the length adjustment of the arm in a mechanically simple manner. Only one threaded joint is thus manufactured in the adjustment tube at the second end of the adjustment tube, which increases the precision of a length adjustment of the arm vis-à-vis a turnbuckle solution, inasmuch as an adjustment of a single rotation of the adjustment tube halves the distance of movement vis-à-vis a turnbuckle using the same threads.

The diameter of the inner surface of the narrowing can remain 0.1 - 1.5 mm, preferably 0.4 - 1.0 mm, larger than the diameter of the thinner axle section. This yields a joint that can withstand a load very well structurally, yet which still has sufficient clearance for a rotational degree of freedom.

Preferably, the second end of the adjustment tube is also reduced prior to the machining of the inner thread of the inner surface so that the inner thread has the same diameter as the external thread on the outer surface of the second axle. The thread can thus only be machined over a short distance and the second axle can be easily rotated into the adjustment tube, in part into the wider, i.e. unreduced, section of the adjustment tube.

Preferably, the first end and/or the second end of the adjustment tube are reduced by means of a crimping machine with radially moving jaws. It is thereby possible to reduce the adjustment tube uniformly so that the narrowing of the adjustment tube retains its circular shape in cross-section well. Furthermore, it must be possible with the crimping machine for the first attachment link at the end of the first axle to pass through the jaws of the crimping machine, since the first axle must be partly inside the adjustment tube when the reduction is carried out.

The first end and/or the second end of the adjustment tube can be reduced by means of a crimping machine comprising 5 - 10 jaws, preferably 8 jaws. This makes it possible to reduce the adjustment tube uniformly in different directions.

Preferably, the first end and/or the second end of the adjustment tube are reduced by a crimping machine with a range of jaw motion in the radial direction of at least 40 mm, preferably at least 68 mm. The first attachment link of the arm can thus pass between the jaws when the jaws are open in an end position so that the first attachment link and the first axle can be joined together and/or machined into a completed piece prior to the formation of the rotary joint.

The first end of the adjustment tube can be reduced in such a manner that the diameter of the inner edge of the narrowing is reduced by 5 - 15 mm, preferably 8 - 10 mm, from its original condition. The diameter of the inner edge of the narrowing is thus large enough prior to the reduction to allow the first axle to be partly inserted into the adjustment tube while the adjustment tube is still reduced enough to yield a rotary joint that is structurally very resistant to pulling and pushing loads.

Preferably, a conical recess is machined into the inner surface of the adjustment tube prior to reduction in order to form a retaining groove and a narrowing. A retaining groove and a narrowing can thus be produced easily in the inner surface of the adjustment tube for the ridge of the first axle while the adjustment tube remains structurally durable.

The invention is illustrated in the following in detail with reference to the attached drawings illustrating embodiments of the invention, wherein
- Figure 1a: shows an axonometric projection of a three-point tractor hitch device provided with arms according to the invention,
- Figure 1b: shows a top view of a three-point tractor hitch device provided with arms according to the invention,
- Figure 2a: shows an axonometric projection of a screw-adjustable lateral stabilizer according to the invention,
- Figure 2b: shows a side view of a screw-adjustable lateral stabilizer according to the invention,
- Figure 2c: shows a side view and a partial cross-section of a screw-adjustable lateral stabilizer according to the invention,
- Figure 3a: shows an axonometric projection of an automatic lateral stabilizer according to the invention,
- Figure 3b: shows a side view of an automatic lateral stabilizer according to the invention,
- Figure 3c: shows a side view and a partial cross-section of an automatic lateral stabilizer according to the invention,
- Figure 4a: shows an axonometric projection of a lifting bar according to the invention,
- Figure 4b: shows a side view of a lifting bar according to the invention,
- Figure 4c: shows a side view and a partial cross-section of a lifting bar according to the invention,
- Figure 5a: shows an axonometric projection of a further lifting bar according to invention,
- Figure 5b: shows a side view and a partial cross-section of a further lifting bar according to the invention in a locked position,
- Figure 5c: shows a side view and a partial cross-section of a further lifting bar according to the invention in a floating position,
- Figure 6a: shows an axonometric projection of a pushing arm according to the invention,
- Figure 6b: shows a side view of a pushing rod according to the invention,
- Figure 7a: shows a schematic illustration of a step of a method according to the invention in which the first axle and the adjustment tube are unattached,
- Figure 7b: shows a schematic illustration of a step of a method according to the invention in which the first axle is inserted into the adjustment tube prior to the reduction,
- Figure 7c: shows a schematic illustration of a step of a method according to the invention in which the first axle and the adjustment tube are joined together,
- Figure 8a: shows a schematic illustration of a step for manufacturing the adjustment tube according to the invention prior to the reduction,
- Figure 8b: shows a schematic illustration of an adjustment tube according to the invention following the reduction in a manufacturing step.

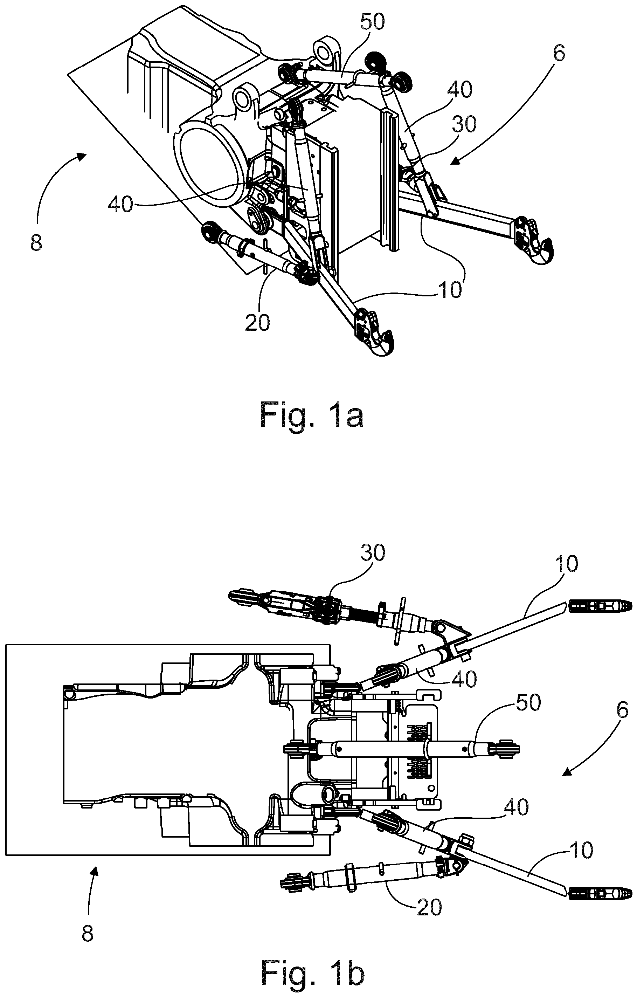

Figures 1a and 1b show a three-point hitch device 6 arranged on the rear part 8 of a tractor and comprising arms according to the invention. The three-point hitch device 6 is provided with drawing arms 10, which are not the subject of the present invention, as well as a screw-adjustable lateral stabilizer 20, an automatic lateral stabilizer 30, a lifting bar 40 and a pushing arm 50 according to the invention. All arms according to the invention have a first attachment link 61 and a second attachment link 62, which can be forked heads or eyelet heads depending on the intended use. In all embodiments, a threadless rotary joint 90 is configured between the first attachment link 61 and the second attachment link 62. The arms according to the invention can also be used in other tractor hitch devices, such as a two-point hitch device.

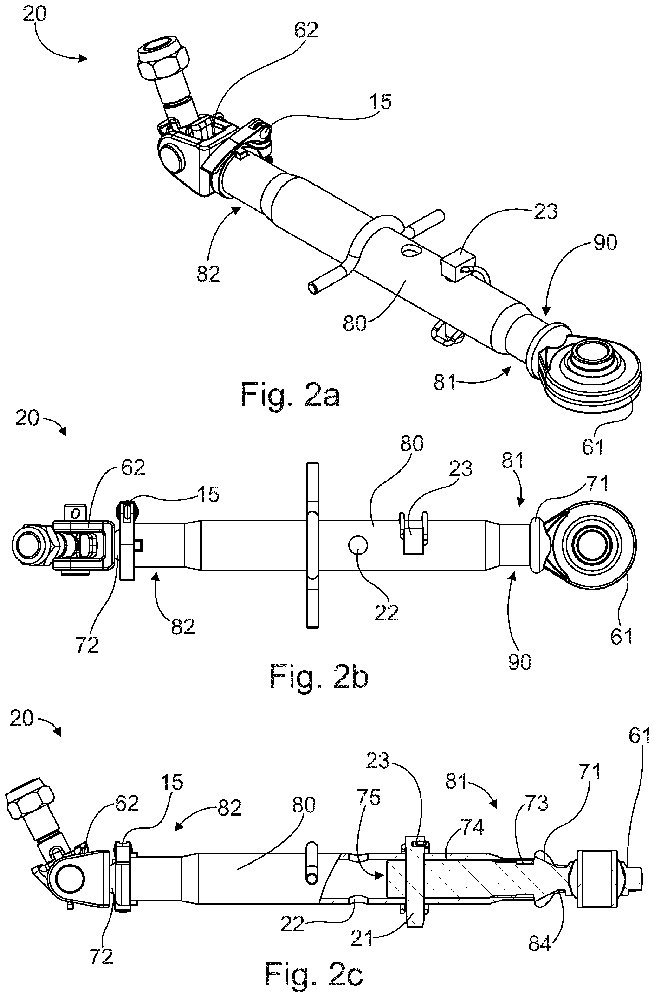

Figures 2a, 2b and 2c show a screw-adjustable lateral stabilizer 20 according to the invention with a first attachment link 61 and a second attachment link 62. A first axle 71 is attached to the first attachment link 61, and a second axle 72 is attached to the second attachment link 62. An adjustment tube 80 with a sleeve-like first end 81 and with a second end 82 is provided between the first attachment link 61 and the second attachment link 62. The first axle 71 is attached to the sleeve-like first end 81 of the adjustment tube 80 and the second axle 72 is attached to the second end 82 of the adjustment tube 80. A threadless rotary joint 90 is provided between the first axle 71 and the adjustment tube 80 that allows the first axle 71 and the adjustment tube 80 to rotate freely relative to each other. The first attachment link 61 and the second attachment link 62 can consequently also rotate relative to each other. The adjustment tube 80 is used to adjust the length of the screw-adjustable lateral stabilizer 20 so as to provide a length adjustment at the second end 82 of the adjustment tube 80. In order to form the length adjustment, the outer surface of the second axle 72 has an external thread and the inner surface of the second end 82 of the adjustment tube 80 has a corresponding internal thread so that the second axle 72 is configured so as to be partially rotatable into the adjustment tube 80. The screw-adjustable lateral stabilizer 20 also has a quick-release clamp 15 with which the second axle 72 can be locked in any position in the adjustment tube 80 in a continuous manner.

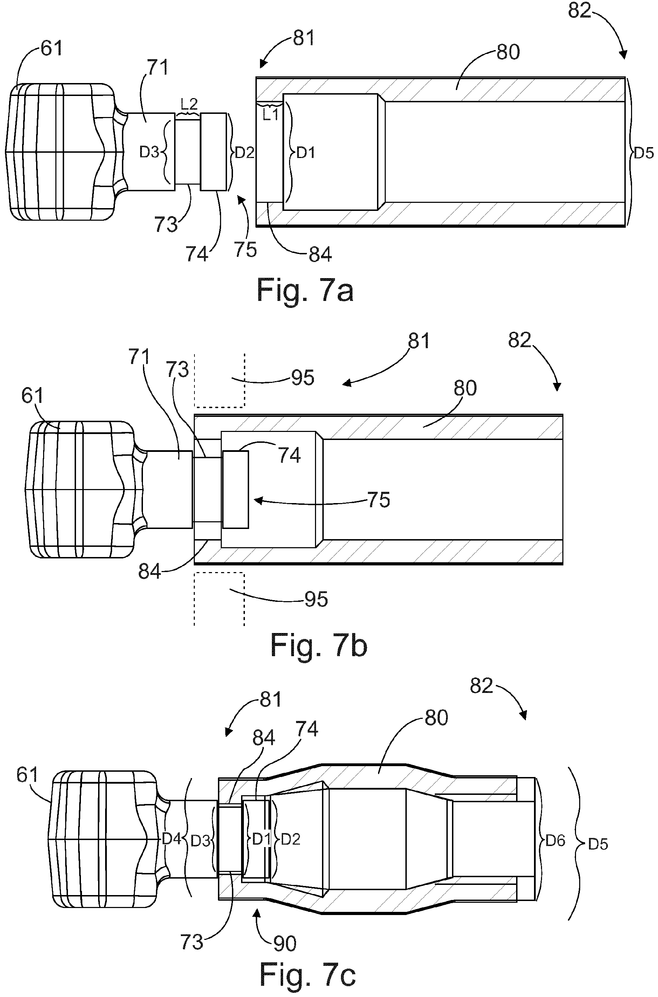

In order to form the threadless rotary joint 90, the first axle 71 includes a ridge 74 and a thinner axle section 73 between the ridge 74 and the first attachment link 61, while the sleeve-like first end 81 of the adjustment tube 80 includes a narrowing 84, i.e. a ridge on the inner surface of the adjustment tube 80, that extends to the thinner axle section 73. The first axle 71 is partially inserted coaxially into the sleeve-like first end 81 of the adjustment tube 80. The first end 81 of the adjustment tube 80 is structurally homogeneous and comprises a reduction at the point of the narrowing 84. Specifically, the entire adjustment tube 80 in this embodiment is structurally homogeneous, i.e. the adjustment tube does not include any welded joints or other joints inasmuch as the adjustment tube 80 is manufactured from a single piece of manufacturing material. The adjustment tube 80 is manufactured from a straight metal tube of uniform thickness here. The narrowing 84 is configured around the thinner axle 73 by reducing the sleeve-like first end 81 of the adjustment tube 80 so as to render the diameter D1 of the inner edge of the narrowing 84 smaller than the diameter D2 of the ridge 74 while leaving the diameter D1 of the inner edge of the narrowing 84 larger than the diameter D3 of the thinner axle section 73. In this embodiment, the adjustment tube is manufactured starting from a straight metal pipe of uniform thickness so that the reduction is visible on the outer surface of the adjustment tube, i.e. the diameter D4 of the outer surface of the first end 81 of the adjustment tube 80 is smaller than the diameter D5 of the thickest point of the outer surface of the adjustment tube 80 after the reduction. The formation of the rotary joint 90 is addressed in greater detail in Figures 7a, 7b and 7c and later on in the description.

In this embodiment, the first attachment link 61 and the first axle 71 are structurally homogeneous, i.e. the first attachment link 61 and the first axle 71 are machined from a single piece of manufacturing material, which yields a mechanically very robust structure. On the whole, this is rendered possible by the rotary joint 90 according to the invention, which is produced by reducing the first end 81 of the adjustment tube 80, as the attachment of the first axle 71 to the adjustment tube 80 would not be feasible without the reduction of the adjustment tube 80. The invention, however, does not exclude the possibility that the first axle and the first attachment link are machined from separate pieces, which are joined together, for example by welding, in a selected manufacturing step.

In the screw-adjustable lateral stabilizer 20 shown in Figures 2a, 2b and 2c, the length L2 of the thinner axle section 73 of the first axle 71 is significantly longer than the length L1 of the narrowing 84 of the adjustment tube 80 (Figure 7a). This allows a longitudinal movement of the first axle 71 and the adjustment tube 80 relative to each other, and thus also of the first attachment link 61 and the second attachment link 62 relative to each other, along the length of the thinner axle section 73. The longitudinal movement between the first axle 71 and the adjustment tube 80 can optionally be locked or released. In order to allow or lock the longitudinal movement of the first axle 71 and the adjustment tube 80 relative to each other, the adjustment tube 80 of the screw-adjustable lateral stabilizer 20 has a first hole 21 and a second hole 22 together with a pin 23. The first axle 71 also has a hole, which, in the terminal position of movement of the first axle 71 in which the first axle 71 is as deep as possible inside the adjustment tube 80, is aligned with the first hole 21 of the adjustment tube 80 so that, by inserting the pin 23 into both the first hole 21 of the adjustment tube 80 and the corresponding hole of the first axle 71, it is possible to block both a longitudinal movement between the first attachment link 61 and the second attachment link 62 as well as a rotational movement. The movement can be released by placing the pin 23 in the second hole 22 of the adjustment tube 80. The position of the pin and thereby the locking/release of the longitudinal movement is selected according to the implement to be attached to the tractor.

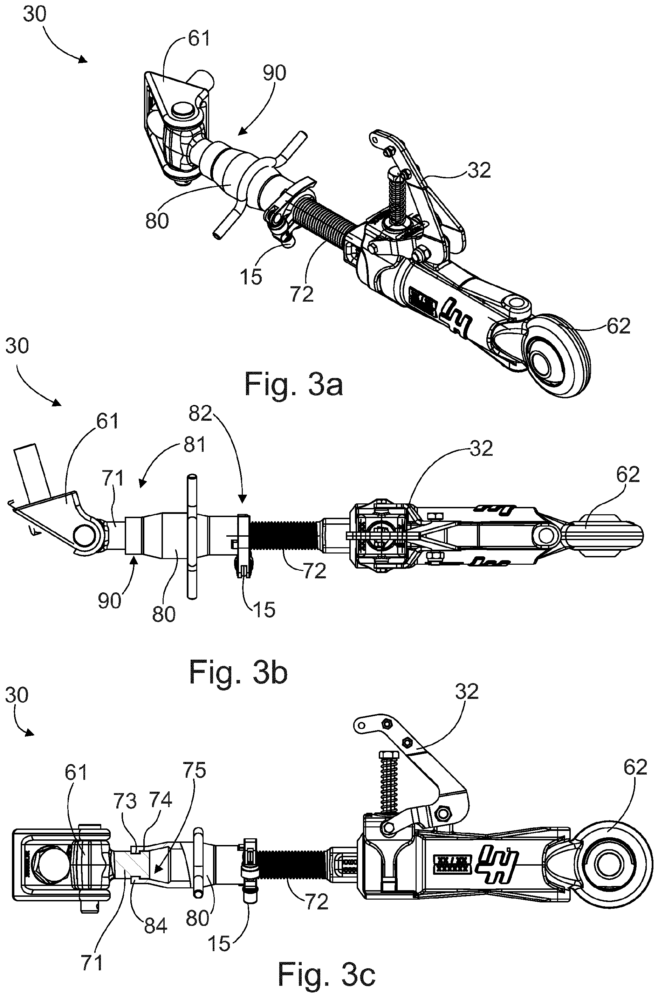

Figures 3a, 3b and 3c show an automatic lateral stabilizer 30 according to the invention. The automatic lateral stabilizer 30 corresponds in many respects to the screw-adjustable lateral stabilizer 20 described in the foregoing. The automatic lateral stabilizer 20 has a first attachment link 61 and a second attachment link 62, and a first axle 71 is attached to the first attachment link 61 and a second axle 72 is attached to the second attachment link 62. Provided between the first attachment link 61 and the second attachment link 62 is an adjustment tube 80, to the second end 82 of which a second axle 72 is attached by means of threads in this embodiment as well, while a quick-release clamp 15 can be used for locking the length adjustment. The first axle 71 is attached to the sleeve-like first end 81 of the adjustment tube 80 by means of a rotary joint 90 that allows the first axle 71 and the adjustment tube 80 to rotate freely relative to each other. In contrast to the previous embodiment, the length L2 of the thinner axle section 73 of the first axle 71 is only slightly longer here, by approximately 1 mm, than the length L1 of the narrowing 84 of the adjustment tube 80 (Figure 7a). The longitudinal movement between the first attachment link 61 and the second attachment link 62 is instead provided by a damping element provided inside the automatic lateral stabilizer 30 between the second attachment link 62 and the second axle 72. In particular in an automatic lateral stabilizer 30, the rotary joint 90 according to the invention allows the adjustment tube 80 to be made shorter than before compared to a turnbuckle solution so that there is more space for the damping element. In the automatic lateral stabilizer 30, the longitudinal movement of the first attachment link 61 and second attachment link 62 can optionally be locked and released by means of a catch 32. The catch 32 can be attached, for example, to a mudguard of a tractor so that the longitudinal movement between the first attachment link 61 and the second attachment link 62 is released and locked automatically according to the height position of the automatic lateral stabilizers 30 and drawing arms 10. The locking mechanism of the automatic lateral stabilizer 30 is described in greater detail in the patent publication FI 118985 B.

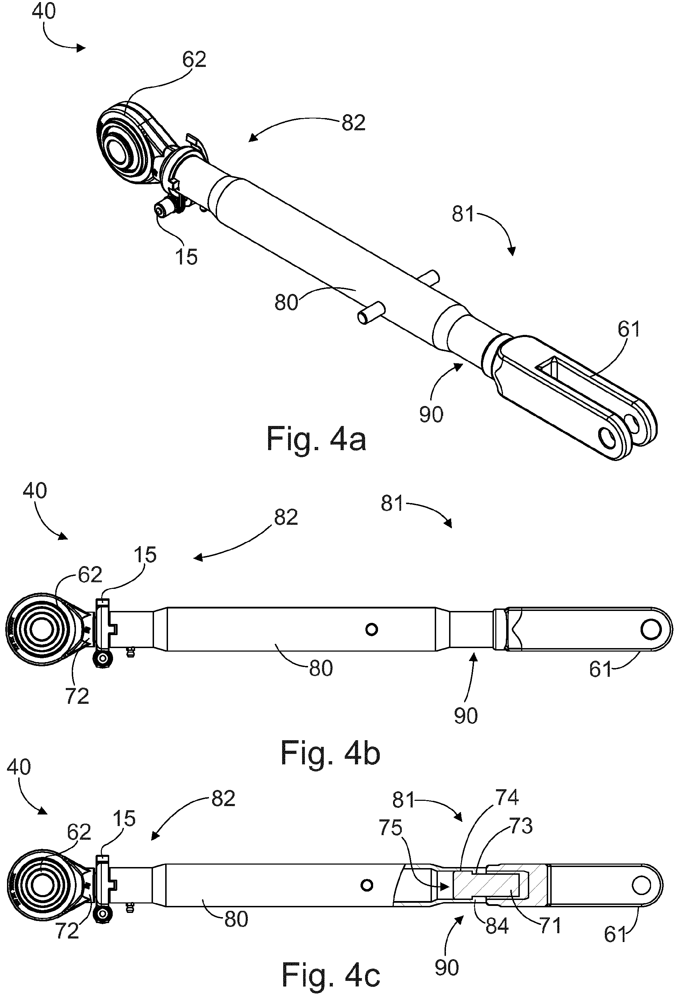

Figures 4a, 4b and 4c show a lifting bar 40 according to the invention, which is structurally very similar to a screw-adjustable lateral stabilizer 20. The lifting bar 40 has a first attachment link 61 and a second attachment link 62, and a first axle 71 is attached to the first attachment link 61 and a second axle 72 is attached to the second attachment link 62. Provided between the first attachment link 61 and the second attachment link 62 is an adjustment tube 80, to the sleeve-like first end 81 of which the first axle 71 is attached by means of a rotary joint 90 and to the second end 82 of which the second axle 72 is attached by means of threads while a quick-release clamp 15 can be used to lock the length adjustment. In this embodiment, there is no degree of freedom at all between the first attachment link 61 and the second attachment link 62 in the longitudinal direction of the lifting bar 40, inasmuch as the rotary joint 90 is configured to be fixed in the longitudinal direction in such a manner that the length L2 of the thinner axle section 73 of the first axle 71 is only slightly longer, by approximately 1 mm, than the length L1 of the narrowing 84 of the adjustment tube 80 in order to provide sufficient clearance to allow the rotation of the rotary joint 90 (Figure 7a).

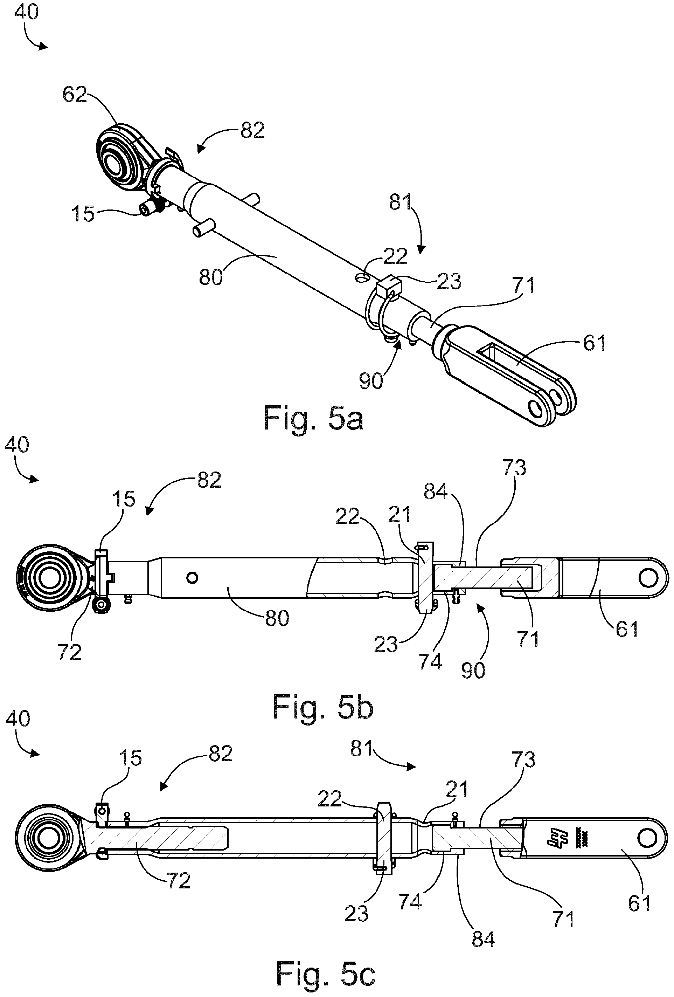

Figures 5a, 5b and 5c show a further lifting bar 40 according to the invention, which has a longitudinal degree of freedom corresponding to that of the screw-adjustable lateral stabilizer 20. Here too, the lifting bar 40 has a first attachment link 61 and a second attachment link 62, and a first axle 71 is attached to the first attachment link 61 and a second axle 72 is attached to the second attachment link 62. Provided between the first attachment link 61 and the second attachment link 62 is an adjustment tube 80, to the sleeve-like first end 81 of which the first axle 71 is attached by means of a rotary joint and to the second end 82 of which the second axle 72 is attached by means of threads while a quick-release clamp 15 can be used to lock the length adjustment. In this embodiment, the length L2 of the thinner axle section 73 of the first axle 71 is significantly longer than the length L1 of the narrowing 84 of the adjustment tube 80, thus allowing a longitudinal movement of the first axle 71 and the adjustment tube 80 relative to each other along the length of the thinner axle section 73 (Figure 7a). The longitudinal movement between the first axle 71 and the adjustment tube 80 can optionally be locked or released. In order to allow or lock the longitudinal movement of the first axle 71 and the adjustment tube 80 relative to each other, the adjustment tube 80 of the lifting bar 40 has a first hole 21 and a second hole 22 as well as a pin 23. In this embodiment, the first axle 71 does not have a hole, the pin 23 rather being placed in the first hole 21 of the adjustment tube 80 in order to lock the longitudinal movement, which locks the movement of the lifting bar 40 in a terminal position in which the distance between the first attachment link 61 and the second attachment link 62 of the lifting bar 40 is at a maximum, by pressing the edge of the ridge 74 of the first axle 71 against the edge of the narrowing 84 of the adjustment tube 80 (Figure 5b). The pin 23 thus does not lock the rotary joint 90 of the lifting bar 80 inasmuch as there is still a rotational degree of freedom between the first attachment link 61 and the adjustment tube 80. Correspondingly, the pin 23 can be moved into the second hole 22 of the adjustment tube 80 so that the longitudinal degree of freedom of the lifting bar 40 is freed, thus allowing a rotation and a longitudinal movement between the first attachment link 61 and the adjustment tube 80 (Figure 5c). The position of the pin and thereby the locking/release of the longitudinal movement is selected according to the implement to be attached to the tractor.

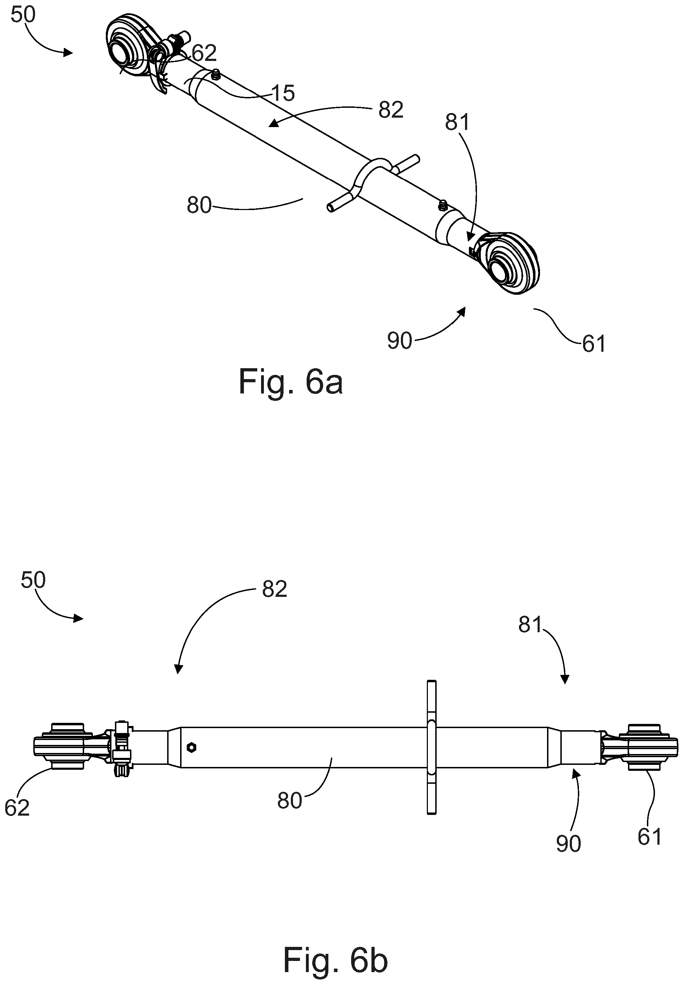

Figures 6a and 6b show a pushing arm 50 according to the invention, which is structurally very similar to the lifting bar 40 shown in Figures 4a, 4b and 4c. The pushing arm 50 has a first attachment link 61 and a second attachment link 62, and a first axle 71 is attached to the first attachment link 61 and a second axle 72 is attached to the second attachment link 62. Provided between the first attachment link 61 and the second attachment link 62 is an adjustment tube 80, to the sleeve-like first end 81 of which the first axle 71 is attached by means of a rotary joint 90 and to the second end 82 of which the second axle 72 is attached by means of threads while a quick-release clamp 15 can be used to lock the length adjustment. In this embodiment, there is no degree of freedom in the longitudinal direction of the pushing arm 50 between the first attachment link 61 and the second attachment link 62, inasmuch as the rotary joint 90 is configured to be fixed in the longitudinal direction in such a manner that the length L2 of the thinner axle section 73 of the first axle 71 is only slightly longer, by approximately 1 mm, than the length L1 of the narrowing 84 of the adjustment tube 80 in order to provide sufficient clearance to allow the rotation of the rotary joint 90 (Figure 7a).

Figure 7a shows a step of the method according to the invention in which the first axle 71 and the adjustment tube 80 are unattached. In Figure 7b, the first axle 71 is partially inserted into the adjustment tube 80 prior to the reduction. In Figure 7c, the first axle 71 and the adjustment tube 80 are joined together in such a manner that there is a threadless rotary joint 90 between them, which constitutes the reduction joint.

Before the first axle 71 and the adjustment tube 80 are joined together by means of the threadless rotary joint 90, a ridge 74 of a selected diameter D2 is machined into the first axle 71, and a thinner axle section 73 of a selected length L2 and diameter D3 is machined between the ridge 74 and the first attachment link 61. In Figures 7a, 7b and 7c, the first axle 71 has the same diameter on either side of the thinner axle section 73, although it can also have diameters of different sizes on either side of the thinner axle section 73. In any case, the diameter of the first axle 71 on either side of the thinner axle section 73 is greater than the diameter D3 of the thinner axle section 73.

A narrowing 84 of a selected length L1 and with a selected diameter D1 of its inner edge is machined into the sleeve-like first end 81 of the adjustment tube 80. The first end 81 of the adjustment tube 80 is structurally homogeneous, i.e. there are no welded joints or other structural joints near the point comprising the narrowing 84 of the adjustment tube 80. The length L1 of the narrowing 84 is always smaller than the length L2 of the thinner axle section 73 of the first axle 71. The length L2 of the thinner axle section 73 of the first axle 71 can be machined so as to be 0.1 - 2.0 mm, preferably 0.5 - 1.5 mm, longer than the length L1 of the narrowing 84 of the adjustment tube 80, which yields a rotary yet robust joint that is fixed in the longitudinal direction of the arm. Alternatively, the length L2 of the thinner axle section 73 of the first axle 71 can be machined so as to be significantly longer, by several centimetres, even tens of centimetres, than the length L1 of the narrowing 84 of the adjustment tube 80 so as to allow a longitudinal movement of the first axle 71 and the adjustment tube 80 relative to each other in addition to a rotation. At this step, the diameter D1 of the narrowing 84 is larger than the diameter D2 of the ridge 74.

Next, the first axle 71 is partially inserted with its first end 75 first coaxially into the sleeve-like first end 81 of the adjustment tube 80 in such a manner that the thinner axle section 73 and the narrowing 84 are aligned. The first end 75 of the first axle 71 is the end opposite the end attached to the first attachment link 61. The sleeve-like first end 81 of the adjustment tube 80 is then preferably reduced at room temperature so as to cause a plastic deformation, in the course of which the diameter D1 of the inner edge of the narrowing 84 is rendered smaller than a diameter D2 of the ridge 74 of the first axle 71. In other words, the sleeve-like first end 81 of the adjustment tube 80 is reduced so as to render the diameter D1 of the inner edge of the narrowing 84 smaller than the diameter of the first axle 71 on either side of the thinner axle section 73, i.e. the narrowing 84 is configured loosely around the thinner axle section 73. The edges of the thinner axle section 73 limit the longitudinal movement of the narrowing 84 on both sides and thus the longitudinal movement of the adjustment tube 80. The diameter D1 of the inner edge of the narrowing 84, however, is left slightly larger than the diameter D3 of the thinner axle section 73. The diameter D1 of the inner surface of the narrowing 84 after the reduction can be 0.1 - 1.5 mm, preferably 0.4 - 1.0 mm, larger than the diameter D3 of the thinner axle section 73. In the course of the reduction, the diameter D1 of the inner edge of the narrowing 84 of the sleeve-like first end 81 of the adjustment tube 80 can be reduced from its initial condition by 5 - 15 mm, preferably by 8 - 10 mm.

The second end 82 of the adjustment tube 80 can also be reduced, and internal threads can be machined into the inner surface of the adjustment tube 80 in the reduced area for the attachment of the second axle 72. If the manufacture of the adjustment tube starts with a straight pipe of uniform thickness, the diameter D4 of the outer surface of the sleeve-like first end 81 of the adjustment tube 80 after the reduction is smaller than the diameter D5 of the thickest point of the outer surface of the adjustment tube 80. Correspondingly, the diameter D6 of the outer surface of the second end 82 of the adjustment tube 80 after the reduction is smaller than the diameter D5 of the thickest point of the outer surface of the adjustment tube 80.

A diameter D5 of the thickest point of the outer surface of the adjustment tube 80 thus remains in the central part of the adjustment tube 80. In an alternative embodiment, it is possible to use a pipe with a variable diameter for the manufacture of the adjustment tube 80 in such a manner that, after the reduction and manufacture of the rotary joint 90, the outer surface of the pipe has a constant diameter, so that the reduction in the finished arm is observable on the inner surface of the adjustment tube 80.

The radial reduction of the first end 81 and/or second end 82 of the adjustment tube 80 can be carried out, for example, using a Finn-Power FP120 crimping machine. The crimping machine in question has radially movable jaws 95 whose path of movement can be adjusted with great precision, as precise as 0.1 mm. The radially movable jaws 95 of the crimping machine open wide enough to allow the first attachment link 61 of the arm to pass between the jaws 95 when the jaws 95 are open in a terminal position. The first attachment link 61 and the first axle 71 can thus be joined together and/or machined into a finished piece prior to the formation of the rotary joint 90. The invention can evidently be reproduced using other corresponding crimping machines. Reducing machines for reducing the ends of tubes are known in the prior art; in these machines, however, the tube is pressed with the end to be reduced first into a conical cup. The use of this technique in the manufacture of the arm according to the invention is not possible if the first axle 71 and the first attachment link 61 attached to the same are partially inserted into the adjustment tube 80 prior to the reduction of the first end 81 of the adjustment tube 80. The reduction can, however, be provided with the crimping machine with radially movable jaws 95 described in the foregoing, the use of which for this purpose is not generally known in the sector.

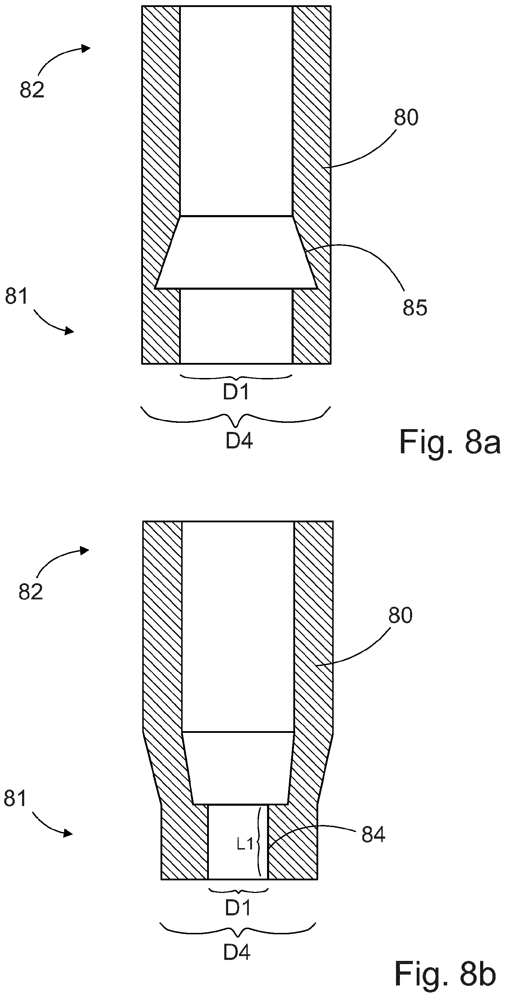

Figures 8a-8b show a method for manufacturing a narrowing 84 of an adjustment tube according to the invention. No material is lost in the course of the reduction of the first end 81 of the adjustment tube 80 so that in practice the wall thickness of the adjustment tube 80 increases at the point of reduction in the same proportion as the diameter D4 of the outer surface of the first end 81 of the adjustment tube 80 decreases. Based on this observation, the adjustment tube 80 can be manufactured, for example, from a straight pipe into the inner surface of which a conical recess 85 is machined close to the first end 81 (Figure 8a). The recess 85 thus functions later as the retaining groove for the ridge 74 of the first axle 71, which facilitates the manufacture of the arm, while allowing the narrowing 84 to be produced directly in the tube in a simple manner. The first end 81 of the tube is then reduced (Figure 8b). For simplicity, the first axle 71 is omitted in Figure 8b, although the first axle 71 is always partially inserted inside the adjustment tube 80 prior to the formation of the reduction joint in the method according to the invention. The amount of material displaced is compensated in the course of the reduction of the first end 81 of the adjustment tube 80 and the wall thickness returns to almost the same as in an unmachined section. Specifically, as the reduction proceeds, the wall thickness at the point of the conical recess 85 returns to almost the same thickness as before the machining. Moreover, as a result of the plastic deformation, the wall thickness of the narrowing 84 increases vis-à-vis its original thickness, thus rendering the first end 81 of the adjustment tube 80 and thereby the rotary joint 90 more robust than before.

## Claims

1. An arm of a tractor hitch device, the arm comprising a first attachment link (61) and a second attachment link (62), wherein a first axle (71) is attached to the first attachment link (61) and a second axle (72) is attached to the second attachment link (62), and wherein an adjustment tube (80) with a sleeve-like first end (81) and with a second end (82) is provided between the first attachment link (61) and the second attachment link (62), and wherein the first axle (71) is partially inserted coaxially into the sleeve-like first end (81) of the adjustment tube (80) and wherein the second axle (72) is attached to the second end (82) of the adjustment tube (80), and wherein a rotary joint (90) is provided between the first axle (71) and the adjustment tube (80) that allows the first axle (71) and the adjustment tube (80) to rotate freely relative to each other, wherein, for the formation of the rotary joint, the first axle (71) includes a ridge (74) and a thinner axle section (73) between the ridge (74) and the first attachment link (61), and the sleeve-like first end (81) of the adjustment tube (80) includes a narrowing (84) that extends to the thinner axle section (73), the narrowing (84) being configured around the thinner axle section (73), **characterized in that** said rotary joint (90) is a crimped reduction joint, wherein the first end (81) of the adjustment tube (80) is reduced so as to render the diameter (D1) of the inner edge of the narrowing (84) smaller than the diameter (D2) of the ridge (74) while leaving the diameter (D1) of the inner edge of the narrowing (84) larger than the diameter (D3) of the thinner axle part (73).

2. The arm according to claim 1, **characterized in that** the first end (81) of the adjustment tube (80) is cold-formed so as to have a smaller diameter in the reduction joint.

3. The arm according to claim 1 or 2, **characterized in that** the first end (81) of the adjustment tube (80) is essentially structurally homogeneous.

4. The arm according to any of claims 1 to 3, **characterized in that** the inner surface of the second end (82) of the adjustment tube (80) has an internal thread and the outer surface of the second axle (72) has a corresponding external thread so that the second axle (72) is configured so as to be partially rotatable into the adjustment tube (80) by a selected distance in order to form the length adjustment of the arm.

5. The arm according to any of claims 1 to 4, **characterized in that** the arm is a screw-adjustable lateral stabilizer (20) or an automatic lateral stabilizer (30) or a lifting bar (40) or a pushing arm (50) of a three-point hitch device (6).

6. The arm according to any of claims 1 to 5, **characterized in that** the diameter (D4) of the outer surface of the first end (81) of the adjustment tube (80) is smaller than the diameter (D5) of the thickest point of the outer surface of the adjustment tube (80).

7. The arm according to any of claims 1 to 6, **characterized in that** the diameter (D6) of the outer surface of the second end (82) of the adjustment tube (80) is smaller than the diameter (D5) of the thickest point of the outer surface of the adjustment tube (80).

8. The arm according to any of claims 1 to 7, **characterized in that** the diameter (D1) of the inner surface of the narrowing (84) is 0.1 - 1.5 mm, preferably 0.4 - 1.0 mm, larger than the diameter (D3) of the thinner axle section (73).

9. The arm according to any of claims 1 to 8, **characterized in that** the length (L2) of the thinner axial portion (73) of the first axle (71) is 0.1 - 2.0 mm, preferably 0.5 - 1.5 mm, longer than the length (L1) of the narrowing (84) of the adjustment tube (80), thus allowing the formation of a rotary joint that is fixed in the longitudinal direction of the arm.

10. The arm according to any of claims 1 to 8, **characterized in that** the length (L2) of the thinner axle section (73) of the first axle (71) is significantly longer, preferably 3 - 50 cm, more preferably 5 - 15 cm, longer than the length (L1) of the narrowing (84) of the adjustment tube (80), thus allowing a longitudinal movement of the first axle (71) and the adjustment tube (80) relative to each other.

11. A method for manufacturing an arm of a tractor hitch device, the arm comprising a first attachment link (61) and a second attachment link (62), wherein a first axle (71) is attached to the first attachment link (61) and a second axle (72) is attached to the second attachment link (62), and wherein an adjustment tube (80) with a sleeve-like first end (81) and with a second end (82) is arranged between the first attachment link (61) and the second attachment link (62), and wherein the first axle (71) is partially inserted coaxially into the sleeve-like first end (81) of the adjustment tube (80) and the second axle (72) is attached to the second end (82) of the adjustment tube (80), and wherein a rotary joint (90) is formed between the first axle (71) and the adjustment tube (80) that allows the first axle (71) and the adjustment tube (80) to rotate freely relative to each other, in which method
- a ridge (74) is machined into the first axle (71) and a thinner axle section (73) is machined between the ridge (74) and the first attachment link (61), and a narrowing (84) is machined into the sleeve-like first end (81) of the adjustment tube (80),
**characterized in that**
- the first axle (71) is partially inserted coaxially into the adjustment tube (80) in such a manner that the thinner part of the axle (73) and the narrowing (84) are aligned, following which
- the sleeve-like first end (81) of the adjustment tube (80) is reduced by crimping so as to render the diameter (D1) of the inner edge of the narrowing (84) smaller than the diameter (D2) of the ridge (74) while leaving the diameter (D1) of the inner edge of the narrowing (84) larger than the diameter (D3) of the thinner axle section (73).

12. The method according to claim 11, **characterized in that** the first attachment link (61) and the first axle (71) are joined together prior to the reduction, or the first attachment link (61) and the first axle (71) are machined from a single piece of manufacturing material.

13. The method according to claim 11 or 12, **characterized in that** an internal thread is machined into the inner surface of the second end (82) of the adjustment tube (80) and a corresponding external thread is machined into the outer surface of the second axle (82), and the second axle (72) is partially rotated into the adjustment tube (80) by a selected distance in order to form the length adjustment of the arm.

14. The method according to any of claims 11 to 13, **characterized in that** the first end (81) of the adjustment tube (80) is reduced by a crimping machine that has radially movable jaws (95).

15. The method according to any of claims 11 to 14, **characterized in that** a conical recess (85) is machined into the inner surface of the adjustment tube (80) prior to the reduction in order to form a retaining groove and a narrowing.

## Patentansprüche

1. Arm einer Traktoranhängevorrichtung, wobei der Arm ein erstes Befestigungsglied (61) und ein zweites Befestigungsglied (62) umfasst, wobei eine erste Achse (71) an dem ersten Befestigungsglied (61) und eine zweite Achse (72) an dem zweiten Befestigungsglied (62) befestigt ist, und wobei ein Einstellrohr (80) mit einem hülsenartigen ersten Ende (81) und mit einem zweiten Ende (82) zwischen dem ersten Befestigungsglied (61) und dem zweiten Befestigungsglied (62) bereitgestellt ist, und wobei die erste Achse (71) teilweise koaxial in das hülsenförmige erste Ende (81) des Einstellrohrs (80) eingesetzt ist und wobei die zweite Achse (72) am zweiten Ende (82) des Einstellrohrs (80) befestigt ist, und wobei ein Drehgelenk (90) zwischen der ersten Achse (71) und dem Einstellrohr (80) bereitgestellt wird, das es der ersten Achse (71) und dem Einstellrohr (80) ermöglicht, sich frei relativ zueinander zu drehen, wobei zur Bildung der Drehverbindung die erste Achse (71) einen Steg (74) und einen dünneren Achsabschnitt (73) zwischen dem Steg (74) und dem ersten Befestigungsglied (61) einschließt und das hülsenförmige erste Ende (81) des Verstellrohrs (80) eine Verengung (84) aufweist, die sich bis zum dünneren Achsabschnitt (73) erstreckt, wobei die Verengung (84) um den dünneren Achsabschnitt (73) konfiguriert ist, **dadurch gekennzeichnet, dass** die Drehverbindung (90) eine gefalzte Reduktionsverbindung ist, wobei das erste Ende (81) des Einstellrohrs (80) so reduziert ist, dass der Durchmesser (D1) des inneren Rands der Verengung (84) kleiner als der Durchmesser (D2) des Stegs (74) ist, während der Durchmesser (D1) des inneren Rands der Verengung (84) größer als der Durchmesser (D3) des dünneren Achsteils (73) bleibt.

2. Arm nach Anspruch 1, **dadurch gekennzeichnet, dass** das erste Ende (81) des Verstellrohrs (80) kalt geformt ist, sodass es in der Reduzierverbindung einen kleineren Durchmesser aufweist.

3. Arm nach Anspruch 1 oder 2, **dadurch gekennzeichnet, dass** das erste Ende (81) des Verstellrohrs (80) im Wesentlichen strukturell homogen ist.

4. Arm nach einem der Ansprüche 1 bis 3, **dadurch gekennzeichnet, dass** die Innenoberfläche des zweiten Endes (82) des Verstellrohrs (80) ein Innengewinde und die äußere Oberfläche der zweiten Achse (72) ein entsprechendes Außengewinde aufweist, sodass die zweite Achse (72) konfiguriert ist, um teilweise in das Verstellrohr (80) um einen ausgewählten Abstand drehbar zu sein, um die Längeneinstellung des Arms zu bilden.

5. Arm nach einem der Ansprüche 1 bis 4, **dadurch gekennzeichnet, dass** der Arm ein schraubverstellbarer Seitenstabilisator (20) oder ein automatischer Seitenstabilisator (30) oder eine Hubstange (40) oder ein Schubarm (50) einer Dreipunktanhängevorrichtung (6) ist.

6. Arm nach einem der Ansprüche 1 bis 5, **dadurch gekennzeichnet, dass** der Durchmesser (D4) der äußeren Oberfläche des ersten Endes (81) des Einstellrohrs (80) kleiner ist als der Durchmesser (D5) der dicksten Stelle der äußeren Oberfläche des Einstellrohrs (80).

7. Arm nach einem der Ansprüche 1 bis 6, **dadurch gekennzeichnet, dass** der Durchmesser (D6) der äußeren Oberfläche des zweiten Endes (82) des Einstellrohrs (80) kleiner ist als der Durchmesser (D5) der dicksten Stelle der äußeren Oberfläche des Einstellrohrs (80).

8. Arm nach einem der Ansprüche 1 bis 7, **dadurch gekennzeichnet, dass** der Durchmesser (D1) der Innenoberfläche der Verengung (84) 0,1-1,5 mm, vorzugsweise 0,4-1,0 mm, größer ist als der Durchmesser (D3) des dünneren Achsabschnitts (73).

9. Arm nach einem der Ansprüche 1 bis 8, **dadurch gekennzeichnet, dass** die Länge (L2) des dünneren axialen Abschnitts (73) der ersten Achse (71) 0,1-2,0 mm, vorzugsweise 0,5-1,5 mm, länger ist als die Länge (L1) der Verengung (84) des Verstellrohrs (80), wodurch die Bildung einer Drehverbindung ermöglicht wird, die in Längsrichtung des Arms fixiert ist.

10. Arm nach einem der Ansprüche 1 bis 8, **dadurch gekennzeichnet, dass** die Länge (L2) des dünneren Achsabschnitts (73) der ersten Achse (71) deutlich länger, vorzugsweise 3-50 cm, besonders bevorzugt 5-15 cm, länger ist als die Länge (L1) der Verengung (84) des Verstellrohrs (80), sodass eine Längsbewegung der ersten Achse (71) und des Verstellrohrs (80) relativ zueinander möglich ist.

11. Verfahren zum Herstellen eines Arms einer Traktoranhängevorrichtung, wobei der Arm ein erstes Befestigungsglied (61) und ein zweites Befestigungsglied (62) umfasst, wobei eine erste Achse (71) an dem ersten Befestigungsglied (61) und eine zweite Achse (72) an dem zweiten Befestigungsglied (62) befestigt ist, und wobei zwischen dem ersten Befestigungsglied (61) und dem zweiten Befestigungsglied (62) ein Verstellrohr (80) mit einem hülsenförmigen ersten Ende (81) und mit einem zweiten Ende (82) angeordnet ist, und wobei die erste Achse (71) teilweise koaxial in das hülsenförmige erste Ende (81) des Verstellrohres (80) eingesetzt ist und die zweite Achse (72) am zweiten Ende (82) des Verstellrohres (80) befestigt ist, und wobei zwischen der ersten Achse (71) und dem Verstellrohr (80) eine Drehverbindung (90) gebildet wird, die eine freie Drehung der ersten Achse (71) und des Verstellrohrs (80) relativ zueinander ermöglicht, wobei bei diesem Verfahren
- in die erste Achse (71) ein Steg (74) und zwischen dem Steg (74) und dem ersten Befestigungsglied (61) ein dünnerer Achsabschnitt (73) eingearbeitet ist und in das hülsenförmige erste Ende (81) des Einstellrohrs (80) eine Verengung (84) eingearbeitet ist,
**dadurch gekennzeichnet, dass**
- die erste Achse (71) teilweise koaxial in das Einstellrohr (80) eingesetzt wird, sodass der dünnere Teil der Achse (73) und die Verengung (84) aufeinander ausgerichtet sind, woraufhin
- das hülsenförmige erste Ende (81) des Einstellrohrs (80) durch Crimpen so reduziert wird, dass der Durchmesser (D1) des inneren Rands der Verengung (84) kleiner als der Durchmesser (D2) des Stegs (74) wird, während der Durchmesser (D1) des inneren Rands der Verengung (84) größer als der Durchmesser (D3) des dünneren Achsabschnitts (73) bleibt.

12. Verfahren nach Anspruch 11, **dadurch gekennzeichnet, dass** das erste Befestigungsglied (61) und die erste Achse (71) vor der Zerkleinerung zusammengefügt werden, oder dass das erste Befestigungsglied (61) und die erste Achse (71) aus einem einstückigen Material hergestellt werden.

13. Verfahren nach Anspruch 11 oder 12, **dadurch gekennzeichnet, dass** in die Innenoberfläche des zweiten Endes (82) des Einstellrohrs (80) ein Innengewinde und in die äußere Oberfläche der zweiten Achse (82) ein entsprechendes Außengewinde eingearbeitet wird und die zweite Achse (72) teilweise um einen ausgewählten Abstand in das Einstellrohr (80) gedreht wird, um die Längeneinstellung des Arms zu bilden.

14. Verfahren nach einem der Ansprüche 11 bis 13, **dadurch gekennzeichnet, dass** das erste Ende (81) des Einstellrohrs (80) durch eine Crimpmaschine, die radial bewegliche Backen (95) aufweist, reduziert wird.

15. Verfahren nach einem der Ansprüche 11 bis 14, **dadurch gekennzeichnet, dass** in die Innenoberfläche des inneren Rohres (80) vor dem Reduzieren eine konische Vertiefung (85) eingearbeitet wird, um eine Haltenut und eine Verengung zu bilden.

## Revendications

1. Bras d'un dispositif d'attelage de tracteur, le bras comprenant un premier point de fixation (61) et un deuxième point de fixation (62), dans lequel un premier essieu (71) est attaché au premier point de fixation (61) et un deuxième essieu (72) est attaché au deuxième point de fixation (62), et dans lequel un tube de réglage (80) doté d'une première extrémité de type manchon (81) et d'une deuxième extrémité (82) est placé entre le premier point de fixation (61) et le deuxième point de fixation (62), et dans lequel le premier essieu (71) est partiellement inséré de manière coaxiale dans la première extrémité de type manchon (81) du tube de réglage (80) et dans lequel le deuxième essieu (72) est attaché à la deuxième extrémité (82) du tube de réglage (80), et dans lequel un raccord rotatif (90) est placé entre le premier essieu (71) et le tube de réglage (80), et permet au premier essieu (71) et au tube de réglage (80) de pivoter librement l'un par rapport à l'autre, où, pour la formation du raccord rotatif, le premier essieu (71) inclut une nervure (74) et une partie d'essieu plus fine (73) entre la nervure (74) et le premier point de fixation (61), et la première extrémité de type manchon (81) du tube de réglage (80) présente un rétrécissement (84) qui s'étend jusqu'à la partie d'essieu plus fine (73), le rétrécissement (84) étant positionné autour de la partie d'essieu plus fine (73), **caractérisé en ce que** ledit raccord rotatif (90) est un raccord de réduction ourlé, dans lequel la première extrémité (81) du tube de réglage (80) est réduite de manière à avoir un diamètre (D1) du bord interne du rétrécissement (84) plus petit que le diamètre (D2) de la nervure (74) tout en faisant en sorte que le diamètre (D1) du bord interne du rétrécissement (84) soit plus grand que le diamètre (D3) de la partie d'essieu plus fine (73).

2. Le bras conformément à la revendication 1, **caractérisé en ce que** la première extrémité (81) du tube de réglage (80) est formée à froid afin d'avoir un diamètre plus petit dans le raccord de réduction.

3. Le bras conformément à la revendication 1 ou 2, **caractérisé en ce que** la première extrémité (81) du tube de réglage (80) est essentiellement homogène au niveau de sa structure.

4. Le bras conformément à l'une quelconque des revendications 1 à 3, **caractérisé en ce que** la surface interne de la deuxième extrémité (82) du tube de réglage (80) est dotée d'un filetage interne et **en ce que** la surface externe du deuxième essieu (72) est dotée d'un filetage externe correspondant de sorte que le deuxième essieu (72) est conçu pour partiellement pivoter dans le tube de réglage (80) sur une distance sélectionnée afin de former le réglage de la longueur du bras.

5. Le bras conformément à l'une quelconque des revendications 1 à 4, **caractérisé en ce que** le bras est un stabilisateur latéral réglable (20) ou un stabilisateur latéral automatique (30) ou une barre de relevage (40) ou un bras de poussée (50) d'un dispositif d'attelage trois-points (6).

6. Le bras conformément à l'une quelconque des revendications 1 à 5, **caractérisé en ce que** le diamètre (D4) de la surface externe de la première extrémité (81) du tube de réglage (80) est plus petit que le diamètre (D5) du point le plus épais de la surface externe du tube de réglage (80).

7. Le bras conformément à l'une quelconque des revendications 1 à 6, **caractérisé en ce que** le diamètre (D6) de la surface externe de la deuxième extrémité (82) du tube de réglage (80) est plus petit que le diamètre (D5) du point le plus épais de la surface externe du tube de réglage (80).

8. Le bras conformément à l'une quelconque des revendications 1 à 7, **caractérisé en ce que** le diamètre (D1) de la surface interne du rétrécissement (84) est 0,1 à 1,5 mm, de préférence 0,4 à 1,0 mm, plus grand que le diamètre (D3) de la partie d'essieu plus fine (73).

9. Le bras conformément à l'une quelconque des revendications 1 à 8, **caractérisé en ce que** la longueur (L2) de la partie axiale plus fine (73) du premier essieu (71) est 0,1 à 2,0 mm, de préférence 0,5 à 1,5 mm, plus longue que la longueur (L1) du rétrécissement (84) du tube de réglage (80), permettant ainsi la formation d'un raccord rotatif qui est fixé dans le sens longitudinal du bras.

10. Le bras conformément à l'une quelconque des revendications 1 à 8, **caractérisé en ce que** la longueur (L2) de la partie d'essieu plus fine (73) du premier essieu (71) est considérablement plus longue, de préférence 3 à 50 cm, plus préférentiellement 5 à 15 cm, plus longue que la longueur (L1) du rétrécissement (84) du tube de réglage (80), permettant ainsi un mouvement longitudinal du premier essieu (71) et du tube de réglage (80) l'un par rapport à l'autre.

11. Procédé de fabrication d'un bras d'un dispositif d'attelage de tracteur, le bras étant composé d'un premier point de fixation (61) et d'un deuxième point de fixation (62), dans lequel un premier essieu (71) est attaché au premier point de fixation (61) et un deuxième essieu (72) est attaché au deuxième point de fixation (62), et dans lequel un tube de réglage (80) doté d'une première extrémité de type manchon (81) et d'une deuxième extrémité (82) est positionné entre le premier point de fixation (61) et le deuxième point de fixation (62), et dans lequel le premier essieu (71) est partiellement inséré de manière coaxiale dans la première extrémité de type manchon (81) du tube de réglage (80) et le deuxième essieu (72) est attaché à la deuxième extrémité (82) du tube de réglage (80), et dans lequel un raccord rotatif (90) est formé entre le premier essieu (71) et le tube de réglage (80) permettant au premier essieu (71) et au tube de réglage (80) de pivoter librement l'un par rapport à l'autre, dans lequel
- une nervure (74) est usinée dans le premier essieu (71) et une partie d'essieu plus fine (73) est usinée entre la nervure (74) et le premier point de fixation (61), et un rétrécissement (84) est usiné dans la première extrémité de type manchon (81) du tube de réglage (80),
**caractérisé en ce que**
- le premier essieu (71) est partiellement inséré de manière coaxiale dans le tube de réglage (80) de sorte que la partie plus fine de l'essieu (73) et le rétrécissement (84) sont alignés, à la suite duquel
- la première extrémité de type manchon (81) du tube de réglage (80) est réduite par sertissage afin de rendre le diamètre (D1) du bord interne du rétrécissement (84) plus petit que le diamètre (D2) de la nervure (74) tout en conservant le diamètre (D1) du bord interne du rétrécissement (84) plus grand que le diamètre (D3) de la partie d'essieu plus fine (73).

12. Procédé conformément à la revendication 11, **caractérisé en ce que** le premier point de fixation (61) et le premier essieu (71) sont reliés avant la partie réduite, ou **en ce que** le premier point de fixation (61) et le premier essieu (71) sont usinés à partir d'une seule pièce de matériel de fabrication.

13. Procédé conformément à la revendication 11 ou 12, **caractérisé en ce qu'**un filetage interne est usiné au niveau de la surface interne de la deuxième extrémité (82) du tube de réglage (80) et qu'un filetage externe correspondant est usiné au niveau de la surface externe du deuxième essieu (82), et **en ce que** le deuxième essieu (72) pivote partiellement dans le tube de réglage (80) sur une distance sélectionnée afin de former le réglage de la longueur du bras.

14. Procédé conformément à l'une quelconque des revendications 11 à 13, **caractérisé en ce que** la première extrémité (81) du tube de réglage (80) est réduite par une machine à sertir qui est dotée de mors réglables radialement (95).

15. Procédé conformément à l'une quelconque des revendications 11 à 14, **caractérisé en ce qu'**une fraisure conique (85) est usinée sur la surface interne du tube de réglage (80) avant la réduction afin de former une rainure de retenue et un rétrécissement.
